# EUROPÄISCHE PATENTANMELDUNG

(11) **EP 2 535 857 A1**
(43) Veröffentlichungstag der Anmeldung: **19.12.2012**
(21) Anmeldenummer: 11004871.7
(22) Anmeldetag: 15.06.2011
(51) Int. Cl.: G06Q 20/00

(54) **Bezahlvorgang mit einem optischen Code**

(71) Anmelder: UMS - United Mobility Services AG, 80333 München (DE)
(72) Erfinder: Wahl, Albert Dr., 82031 Grünwald (DE); Holzapfel, Xaver, 82031 Grünwald (DE); Schmiedler, Robert, 65189 Wiesbaden (DE); Teufel, Thomas, 78582 Balgheim (DE)
(74) Vertreter: Daub, Thomas

(57) **Zusammenfassung**

Die Erfindung geht aus von einem Verfahren mit einem System (10), das zumindest eine Systemrecheneinheit (12) umfasst, die einen optischen Code (14) erstellt.

Es wird vorgeschlagen, dass der optische Code (14) zumindest eine Identifikationskennzeichnung aufweist, die einem einzelnen Geldwert eines Bezahlvorgangs (16) zugeordnet ist.

## Beschreibung

### Stand der Technik

Die Erfindung betrifft ein Verfahren nach dem Oberbegriff des Anspruchs 1.

Es ist bereits ein Verfahren mit einem System, das zumindest eine Systemrecheneinheit umfasst, die einen optischen Code erstellt, vorgeschlagen worden.

### Vorteile der Erfindung

Die Erfindung geht aus von Verfahren mit einem System, das zumindest eine Systemrecheneinheit umfasst, die einen optischen Code erstellt.

Es wird vorgeschlagen, dass der optische Code zumindest eine Identifikationskennzeichnung aufweist, die einem einzelnen Geldwert eines Bezahlvorgangs zugeordnet ist. Unter einem "System" sollen in diesem Zusammenhang vorteilhaft mehrere, insbesondere räumlich verteilt angeordnete Einheiten verstanden werden, die bei einem Bezahlvorgang miteinander kommunizieren. Insbesondere soll unter einer "Systemrecheneinheit" eine Recheneinheit verstanden werden, die Bezahlvorgänge von mehreren Empfängern und mehreren Gebern verarbeitet. Vorzugsweise umfasst die Systemrecheneinheit zumindest einen Server. Unter einer"Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm und/oder Berechnungsroutinen auf. Vorzugsweise sind die Bauteile der Recheneinheit in einem gemeinsamen Gehäuse angeordnet. Unter einem "optischen Code" soll insbesondere ein Code verstanden werden, der bei einem Bezahlvorgang mittels eines insbesondere sichtbaren Lichts ausgelesen wird. Vorzugsweise erstellt die Systemrecheneinheit einen, dem Fachmann als sinnvoll erscheinenden optischen Code, vorteilhaft jedoch einen Strichcode und/oder besonders vorteilhaft einen zweidimensionalen optischen Code. Insbesondere ist die Identifikationskennzeichnung des optischen Codes unabhängig von einer Ausbildung eines Produkts, das mit ihm gezahlt wird. Vorteilhaft weist der optische Code zumindest eine Information auf, die ihn als Code des erfindungsgemäßen Verfahrens kennzeichnet. Insbesondere soll unter dem Begriff "erstellen" verstanden werden, dass die Systemrecheneinheit zumindest ein Informationspaket berechnet, mittels dessen ein optischer Code dargestellt werden kann. Vorzugsweise berechnet die Systemrecheneinheit ein Informationspaket, das als ein digitales Bild ausgebildet ist, insbesondere in einem dem Fachmann als sinnvoll erscheinenden Format, beispielsweise Portable Network Graphics (.png) oder Graphics Interchange Format (.gif). Alternativ berechnet die Systemrecheneinheit ein Informationspaket, aus dem die weitere Recheneinheit, insbesondere eine Empfängerrecheneinheit des Systems, ein digitales Bild erstellt, und zwar insbesondere nach einem immer gleichen Verfahren. Unter einer "Identifikationskennzeichnung" soll insbesondere eine eineindeutige Information verstanden werden, die in dem optischen Code codiert, den optischen Code einem Bezahlvorgang zuordnet. Vorzugsweise wird die Identifikationskennzeichnung für einen oder mehrere Bezahlvorgänge mit einem stets gleichen Betrag des Geldwerts und mit einem stets gleichen Empfänger des Geldwerts verwendet. Vorzugsweise ist die Identifikationskennzeichnung als eine Ziffernfolge und/oder Zahlenfolge ausgebildet. Insbesondere soll unter einem "Bezahlvorgang" ein Vorgang verstanden werden, bei dem ein Geber einen bestimmten Geldwert einem bestimmten Empfänger überträgt. Unter einem "einzelnen Geldwert eines Bezahlvorgangs" soll insbesondere verstanden werden, dass der Identifikationskennzeichnung genau ein bestimmter Geldbetrag zugeordnet ist. Vorzugsweise ist dieser Geldbetrag positiv oder negativ. Besonders bevorzugt ist der Geldbetrag positiv. Durch das erfindungsgemäße Verfahren ist mit geringem technischem Aufwand ein besonders komfortabler und flexibler Bezahlvorgang möglich. Durch den optischen Code kann konstruktiv einfach eine besonders sichere Schnittstelle zwischen Empfänger und Geber des Bezahlvorgangs bereitgestellt werden. Insbesondere ist eine Weitergabe von einer Kreditkarteninformation an den Empfänger überflüssig.

In einer weiteren Ausgestaltung wird vorgeschlagen, dass in den optischen Code eine Information über einen Betrag des Geldwerts codiert wird, wodurch konstruktiv einfach eine Kontrolle des Betrags erreicht werden kann. Insbesondere soll unter einer "Information über einen Betrag des Geldwerts" eine Information verstanden werden, die einen Betrag des Geldwerts beschreibt. Vorzugsweise ist der Betrag in einer Landeswährung angegeben. Alternativ könnte der Betrag von einer Landeswährung unabhängig angegeben werden. Vorzugsweise kann aus dem optischen Code der Betrag des Geldwerts ermittelt werden. Unter dem Begriff "codiert" soll insbesondere verstanden werden, dass die Information zumindest in einer von einem Bediener ohne vorherige Decodierung unverständlichen Form in dem optischen Code enthalten ist.

Des Weiteren wird vorgeschlagen, dass die Systemrecheneinheit die Identifikationskennzeichnung und die dazugehörige Information über einen Betrag des Geldwerts speichert, wodurch die erstellte Identifikationskennzeichnung über einen längeren Zeitraum für einen Bezahlvorgang verwendet werden kann. Insbesondere soll unter "speichern" verstanden werden, dass die Systemrecheneinheit die Information über einen Betrag aufbewahrt, womit sie zu einem späteren Zeitpunkt abrufbar ist. Vorzugsweise weist die Systemrecheneinheit zur Speicherung eine Datenbank auf.

Ferner wird vorgeschlagen, dass in den optischen Code zumindest eine Information über einen Empfänger des Bezahlvorgangs codiert wird, wodurch konstruktiv einfach eine Kontrolle des Betrags möglich ist. Unter einer "Information über einen Empfänger des Bezahlvorgangs" soll insbesondere eine Information verstanden werden, die es einem Bediener ermöglicht, einen Empfänger des Bezahlvorgangs zu überprüfen und/oder zu identifizieren.

Zudem wird vorgeschlagen, dass die Systemrecheneinheit die Identifikationskennzeichnung und eine dazugehörige Information über einen Empfänger des Bezahlvorgangs speichert, wodurch die erstellte Identifikationskennzeichnung über einen längeren Zeitraum für einen Bezahlvorgang verwendet werden kann.

Weiterhin wird vorgeschlagen, dass das System zumindest eine Empfängerrecheneinheit aufweist, an die die Systemrecheneinheit eine Information zur Darstellung des optischen Codes sendet, wodurch ein Bezahlvorgang an vielen verschiedenen Orten eingeleitet werden kann und viele verschiedene Empfänger möglich sind. Unter einer "Empfängerrecheneinheit" soll insbesondere eine Einheit verstanden werden, mittels der der Empfänger des Bezahlvorgangs dem Geber des Bezahlvorgangs den optischen Code bereitstellt. Vorzugsweise ist die Empfängerrecheneinheit als zumindest ein Server ausgebildet, von dem der Empfänger den optischen Code, insbesondere als eine Bilddatei, vorzugsweise über das Internet, anfordert. Alternativ oder zusätzlich könnte die Empfängerrecheneinheit als eine Recheneinheit ausgebildet sein, die den optischen Code auf eine Fläche druckt. Vorzugsweise steht die Empfängerrecheneinheit zumindest teilweise unter einer Kontrolle des Empfängers des Bezahlvorgangs. Vorzugsweise weist das System mehrere Empfängerrecheneinheiten auf. Unter einer "Information zur Darstellung des optischen Codes" soll insbesondere eine Informationsmenge verstanden werden, mittels der ein optischer Code dargestellt werden kann. Insbesondere soll unter dem Begriff "senden" verstanden werden, dass die Systemrecheneinheit eine Nachricht mit der Information zur Darstellung des optischen Codes zu der Empfängerrecheneinheit schickt. Vorzugsweise ist die Nachricht als eine elektronische, digitale Nachricht ausgebildet. Vorteilhaft sendet die Systemrecheneinheit die Information zur Darstellung des optischen Codes über das Internet. Vorteilhaft sendet die Systemrecheneinheit die Information verschlüsselt.

In einer vorteilhaften Ausbildung der Erfindung wird vorgeschlagen, dass die Empfängerrecheneinheit den optischen Code auf einer Fläche darstellt, wodurch eine besonders sichere und komfortable Erfassung des optischen Codes möglich ist. Insbesondere soll unter der Wendung "auf einer Fläche darstellen" verstanden werden, dass die Empfängerrecheneinheit den optischen Code direkt und/oder indirekt auf einer dem Geber des Bezahlvorgangs zumindest zeitweise sichtbaren Fläche abbildet. Unter "direkt" soll insbesondere verstanden werden, dass die Empfängerrecheneinheit ein Anzeigemittel aufweist, auf dessen Fläche der optische Code dargestellt wird. Unter "indirekt" soll insbesondere verstanden werden, dass die Empfängerrecheneinheit den optischen Code zur Darstellung weiter versendet.

In einer weiteren Ausgestaltung wird vorgeschlagen, dass das System zumindest eine mobile Kommunikationseinheit, insbesondere ein Mobiltelefon, mit einer Kameravorrichtung und einer Recheneinheit aufweist, die bei einem Bezahlvorgang den optischen Code mittels der Kameravorrichtung erfasst, wodurch ein besonders komfortabler Bezahlvorgang möglich ist. Insbesondere soll unter einer "mobilen Kommunikationseinheit" eine Einheit verstanden werden, die von einem Bediener bei einem Bezahlvorgang bewegt wird. Insbesondere richtet der Bediener die Kameravorrichtung der mobilen Kommunikationseinheit auf den optischen Code aus. Vorzugsweise ist die mobile Kommunikationseinheit als eine, dem Fachmann als sinnvoll erscheinende Einheit, vorteilhaft jedoch als ein Notebook, als ein Taschencomputer, als ein Mobiltelefon, als ein Tablet-PC und/oder besonders vorteilhaft als ein Smartphone ausgebildet. Vorzugsweise kommuniziert die mobile Kommunikationseinheit mit der Systemrecheneinheit. Vorzugsweise kommuniziert die mobile Kommunikationseinheit zumindest teilweise drahtlos über ein Netzwerk mit der Systemrecheneinheit. Vorzugsweise weist das System mehrere mobile Kommunikationseinheiten auf. Unter einer "Kameravorrichtung" soll insbesondere eine Vorrichtung verstanden werden, die zumindest dazu vorgesehen ist, in einem sichtbaren Lichtbereich ein Aussehen von Oberflächen zu erfassen. Insbesondere soll unter der Wendung "bei einem Bezahlvorgang" verstanden werden, dass der Bediener der mobilen Kommunikationseinheit durch eine Erfassung des optischen Codes mittels der Kameravorrichtung einen Bezahlvorgang startet. Unter "mittels der Kameravorrichtung" soll insbesondere verstanden werden, dass die Kameravorrichtung zu Beginn eines Bezahlvorgangs ein Bild von dem optischen Code aufnimmt.

Des Weiteren wird vorgeschlagen, dass die Recheneinheit zumindest die Identifikationskennzeichnung aus dem optischen Code bestimmt, wodurch auf eine Übertragung eines Bilds der Kameravorrichtung von der mobilen Kommunikationseinheit an die Systemrecheneinheit verzichtet werden kann. Dadurch kann eine geringe zu übertragende Datenmenge erreicht werden. Insbesondere soll unter "bestimmen" verstanden werden, dass die Recheneinheit den optischen Code auswertet und daraus die Identifikationskennzeichnung berechnet.

Ferner wird vorgeschlagen, dass die Recheneinheit die Information über einen Betrag des Geldwerts aus dem optischen Code bestimmt, wodurch dem Bediener auch ohne eine Kommunikation mit der Systemrecheneinheit ein Betrag des Geldwerts angezeigt werden kann.

Zudem wird vorgeschlagen, dass die Recheneinheit die Information über einen Empfänger des Bezahlvorgangs aus dem optischen Codes bestimmt, wodurch dem Bediener auch ohne eine Kommunikation mit der Systemrecheneinheit ein Empfänger des Geldwerts angezeigt werden kann.

Weiterhin wird vorgeschlagen, dass die mobile Kommunikationseinheit, insbesondere nach einem Erfassen des optischen Codes, zumindest die Identifikationskennzeichnung an die Systemrecheneinheit sendet, wodurch ein besonders sicherer Bezahlvorgang möglich ist.

In einer weiteren Ausgestaltung wird vorgeschlagen, dass die Systemrecheneinheit auf einen Empfang der Identifikationskennzeichnung von der mobilen Kommunikationseinheit mit einem Senden zumindest der insbesondere gespeicherten Information über einen Betrag des Geldwerts des Bezahlvorgangs antwortet, wodurch eine von dem Empfänger des Bezahlvorgangs unabhängige Information über den Geldwert dem Bediener der mobilen Kommunikationseinheit zur Verfügung steht. Unter der Wendung "auf einen Empfang antwortet" soll insbesondere verstanden werden, dass die Systemrecheneinheit, nachdem sie die Identifikationskennzeichnung empfangen hat, von der Identifikationskennzeichnung abhängig die Information über einen Betrag des Geldwerts an den Sender der Identifikationskennzeichnung übermittelt.

Des Weiteren wird vorgeschlagen, dass die Recheneinheit der mobilen Kommunikationseinheit den von der Systemrecheneinheit empfangenen Betrag des Geldwerts und den aus dem optischen Code bestimmten Betrag des Geldwerts vergleicht, wodurch ein Fehler und/oder ein Betrugsversuch konstruktiv einfach und schnell ermittelt werden können. Insbesondere soll unter "Beträge vergleichen" verstanden werden, dass die Kommunikationseinheit zumindest überprüft, ob die Beträge gleich sind. Vorzugsweise informiert die Kommunikationseinheit den Bediener der Kommunikationseinheit zumindest, wenn die Beträge ungleich sind.

Ferner wird vorgeschlagen, dass die Systemrecheneinheit auf einen Empfang der Identifikationskennzeichnung von einer mobilen Kommunikationseinheit mit einem Senden zumindest der insbesondere gespeicherten Information über den Empfänger des Bezahlvorgangs antwortet, wodurch konstruktiv einfach einem Betrug vorgebeugt werden kann.

Zudem wird vorgeschlagen, dass die mobile Kommunikationseinheit zumindest ein Anzeigemittel aufweist, das in zumindest einem Betriebszustand zumindest die Information über einen Betrag des Geldwerts einem Bediener darstellt, wodurch der Bediener den Betrag des Geldwerts konstruktiv einfach überprüfen kann. Unter einem "Anzeigemittel" soll insbesondere ein Mittel verstanden werden, das bei einem Betrieb zumindest eine Information von einem Bediener erkennbar ausgibt. Vorteilhaft ist das Anzeigemittel als ein Display ausgebildet. Vorzugsweise stellt das Anzeigemittel mehrere Informationen gleichzeitig dar, und zwar vorzugsweise zumindest den optischen Code und zumindest eine weitere Information, beispielsweise einen Empfänger.

Weiterhin wird vorgeschlagen, dass die mobile Kommunikationseinheit zumindest ein Eingabemittel aufweist, das in zumindest einem Betriebszustand eine Bedienereingabe zu einer Freigabe des Bezahlvorgangs aufnimmt, wodurch eine ungewollte Bezahlung vermieden werden kann. Vorzugsweise ist das Eingabemittel als ein Mittel ausgebildet, das eine Berührung des Anzeigemittels detektiert. Unter "eine Bedienereingabe aufnehmen" soll insbesondere verstanden werden, dass das Eingabemittel zumindest eine von der Bedienereingabe anhängige Kenngröße ausgibt. Insbesondere soll unter der Wendung "zu einer Freigabe des Bezahlvorgangs" verstanden werden, dass nach der Bedienereingabe die Systemrecheneinheit eine Übertragung des Geldwerts von dem Geber an den Empfänger anweist.

In einer vorteilhaften Ausbildung der Erfindung wird vorgeschlagen, dass das Eingabemittel in zumindest einem Betriebszustand eine Bedienereingabe zu einer Auswahl einer Zahlungsweise des Bezahlvorgangs aufnimmt, wodurch eine große Flexibilität erreicht werden kann. Unter "einer Auswahl einer Zahlungsweise" soll insbesondere verstanden werden, dass der Bediener zwischen zumindest zwei unterschiedlichen Geldquellen und/oder Geldübertragungswegen wählt.

In einer weiteren Ausgestaltung wird vorgeschlagen, dass die mobile Kommunikationseinheit in zumindest einem Betriebszustand eine Freigabe des Bezahlvorgangs an die Systemrecheneinheit sendet, wodurch eine besonders sichere Bezahlung möglich ist, weil die Bezahlung von dem Empfänger des Geldwerts unabhängig ausgelöst wird.

Des Weiteren wird vorgeschlagen, dass die Systemrecheneinheit den Bezahlvorgang anweist, wodurch ein Geldfransfer von der Systemrecheneinheit getrennt erfolgt. Unter "den Bezahlvorgang anweisen" soll insbesondere verstanden werden, dass die Systemrecheneinheit mit zumindest einem zur Geldübertragung vorgesehenen System Kontakt aufnimmt und dieses veranlasst, den Geldbetrag von dem Geber an den Empfänger zu übertragen. Vorzugsweise weist die Systemrecheneinheit ein System einer Bank an, den Geldtransfer vorzunehmen.

Ferner wird vorgeschlagen, dass die Systemrecheneinheit eine Bestätigung der Anweisung des Bezahlvorgangs an die Empfängerrecheneinheit sendet, wodurch konstruktiv einfach die Empfängerrecheneinheit von dem Bezahlvorgang abhängige Vorgänge, beispielsweise einen Versand einer Ware, einleiten kann. Unter einer "Bestätigung der Anweisung des Bezahlvorgangs" soll zumindest eine Information verstanden werden, die aussagt, dass die Systemrecheneinheit den Bezahlvorgang angewiesen hat. Vorteilhaft sendet die Systemrecheneinheit eine Bestätigung, dass der Geldwert des Bezahlvorgangs an die Empfänger erfolgreich übertragen worden ist.

Zudem wird vorgeschlagen, dass die Empfängerrecheneinheit die Bestätigung der Anweisung des Bezahlvorgangs an den Bediener ausgibt, wodurch für den Bediener eine besonders vorteilhafte Kontrolle über einen von der mobilen Kommunikationseinheit unabhängigen Weg möglich ist. Insbesondere soll unter der Wendung "an einen Bediener ausgeben" verstanden werden, dass die Empfängerrecheneinheit dem Bediener die Bestätigung der Anweisung mitteilt.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung des Ausführungsbeispiels

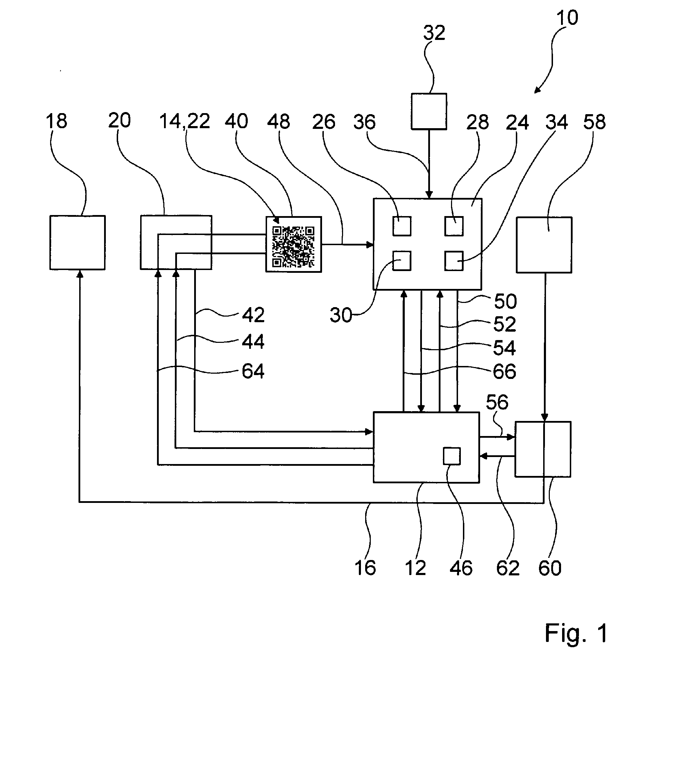

Die Figur zeigt ein erfindungsgemäßes Verfahren zur Abwicklung eines Bezahlvorgangs 16 und ein dazugehöriges System 10 mit einer Systemrecheneinheit 12, mehreren Empfängerrecheneinheiten 20 und mehreren mobilen Kommunikationseinheiten 24. Hier ist jeweils nur eine Empfängerrecheneinheit 20 und eine mobile Kommunikationseinheit 24 dargestellt. Die Systemrecheneinheit 12 ist als zumindest ein Server ausgebildet, der über ein öffentlich zugängliches Netzwerk, hier das Internet, kommuniziert. Die Empfängerrecheneinheit 20 ist als ein von einem Empfänger 18 des Bezahlvorgangs 16 kontrollierter Computer ausgebildet.

Ein Bediener 32 der mobilen Kommunikationseinheit 24 stellt auf einem mit der Empfängerrecheneinheit 20 kommunizierenden Computer 40 eine Bestellung zusammen. Alternativ könnte über den Computer 40 ein einzelner Artikel zum Kauf angeboten werden. Zum Kaufen des Artikels oder der Bestellung muss der Bediener 32 den Bezahlvorgang 16 einleiten, bei dem ein Geldwert an den Empfänger 18 des Bezahlvorgangs 16 übertragen wird.

In einer ersten Kommunikation 42 fordert die Empfängerrecheneinheit 20 von der Systemrecheneinheit 12 Informationen zur Erstellung eines optischen Codes an. Dazu sendet die Empfängerrecheneinheit 20 der Systemrecheneinheit 1 2 den Betrag des Geldwerts des vorgesehenen Bezahlvorgangs 16. Die Systemrecheneinheit 12 erstellt einen optischen Code 14. Der optische Code ist als ein QR-Code ausgebildet. Die Systemrecheneinheit 12 codiert in den optischen Code 14 eine dem Bezahlvorgang zugeordnete Identifikationskennzeichnung, einen Betrag des Geldwerts des Bezahlvorgangs 16 und eine Information über den Empfänger 18 des Bezahlvorgangs 16. Die Systemrecheneinheit 1 2 weist eine Datenbank 46 auf, in der sie die Identifikationskennzeichnung, den Betrag des Geldwerts und die Information über den Empfänger 18 zusammenhängend speichert.

Die Systemrecheneinheit 12 sendet in einer nächsten Kommunikation 44 der Empfängerrecheneinheit 20 Informationen zur Erstellung eines optischen Codes, und zwar in diesem Ausführungsbeispiel eine Datei mit einem den optischen Code darstellenden Bild. Die Empfängerrecheneinheit 20 stellt den optischen Code 14 auf einer Fläche 22 dar. Hier stellt die Empfängerrecheneinheit 20 mittels des Computers 40 den optischen Code 14 auf dem Monitor des Computers 40 dar.

Der Bediener gibt zur Überprüfung einer Berechtigung einen PIN in die mobile Kommunikationseinheit 24 ein. Alternativ könnte eine mobile Kommunikationseinheit den Bediener beispielsweise durch eine Gesichtserkennung, durch eine Erkennung eines Fingerabdrucks und/oder durch ein anderes, dem Fachmann als sinnvoll erscheinendes Verfahren erkennen. Der Bediener 32 der mobilen Kommunikationseinheit 24 richtet eine Kameravorrichtung 26 der mobilen Kommunikationseinheit 24 auf den optischen Code 14 aus. Eine Recheneinheit 28 der mobilen Kommunikationseinheit 24 weist eine Programmierung auf, die bei dem Bezahlvorgang 16 nach einem Fotografieren 48 den optischen Code 14 mittels der Kameravorrichtung 26 erfasst und den optischen Code 14 decodiert. Dabei bestimmt die Recheneinheit 28 die Identifikationskennzeichnung, den Betrag des Geldwerts und den Empfänger 18 des Bezahlvorgangs 16 aus dem optischen Code 14.

Die mobile Kommunikationseinheit 24 sendet in einer nächsten Kommunikation 50 die Identifikationskennzeichnung, den Betrag des Geldwerts und die Information über den Empfänger 18 des Bezahlvorgangs 16 an die Systemrecheneinheit 12. Die Systemrecheneinheit 12 vergleicht diese Informationen mit den in der Datenbank gespeicherten Informationen. Wenn die Informationen übereinstimmen, antwortet die Systemrecheneinheit 12 auf einen Empfang der Identifikationskennzeichnung von der mobilen Kommunikationseinheit 24 in einer nächsten Kommunikation 52 mit einem Senden der Information über einen Betrag des Geldwerts des Bezahlvorgangs 16 und der Information über den Empfänger 18 des Bezahlvorgangs 16.

Die Recheneinheit 28 der mobilen Kommunikationseinheit 24 vergleicht den von der Systemrecheneinheit 12 empfangenen Betrag des Geldwerts und den aus dem optischen Code 14 bestimmten Betrag des Geldwerts. Wenn die Beträge übereinstimmen, stellt ein Anzeigemittel 30 der mobilen Kommunikationseinheit 24 dem Bediener 32 die Information über einen Betrag des Geldwerts und die Information über den Empfänger 18 des Bezahlvorgangs 16 dar. Die mobile Kommunikationseinheit 24 weist ein Eingabemittel 34 auf, das eine Bedienereingabe 36 des Bedieners 32 zu einer Freigabe des Bezahlvorgangs 16 aufnimmt. Des Weiteren nimmt das Eingabemittel 34 eine Bedienereingabe 36 zu einer Auswahl einer Zahlungsweise des Bezahlvorgangs 16 auf. Wenn der Bediener 32 den Bezahlvorgang 16 freigibt, sendet die mobile Kommunikationseinheit 24 in einer nächsten Kommunikation 54 die Freigabe des Bezahlvorgangs 16 an die Systemrecheneinheit 1 2.

Die Systemrecheneinheit 12 weist den Bezahlvorgang 16 in einer nächsten Kommunikation 56 an, indem sie Informationen über den Empfänger 18, über einen Geber 58 des Bezahlvorgangs, insbesondere ein Konto oder eine Kreditkarte des Bedieners, und/oder den Betrag des Geldwerts des Bezahlvorgangs 16 an eine Bank 60 überträgt. Die Bank 60 überweist den Geldwert des Bezahlvorgangs 16 unter Angabe der Identifikationskennzeichnung an den Empfänger 18. Wenn die Übertragung des Geldwerts erfolgreich war, sendet die Bank 60 eine Bestätigung der Übertragung des Geldwerts in einer nächsten Kommunikation 62 an die Systemrecheneinheit 12. Die Systemrecheneinheit 12 sendet die Bestätigung in einer nächsten Kommunikation 64 an die Empfängerrecheneinheit 20, die die Bestätigung des Bezahlvorgangs 16 an den Bediener ausgibt. Die Systemrecheneinheit 1 2 sendet die Bestätigung in einer nächsten Kommunikation 66 an die mobile Kommunikationseinheit 24, die die Bestätigung des Bezahlvorgangs 16 an den Bediener ausgibt. Sollte der Bezahlvorgang nicht erfolgreich sein, sendet die Systemrecheneinheit 12 an die Empfängerrecheneinheit 20 und/oder vorteilhaft an die mobile Kommunikationseinheit 24 eine Fehlermeldung.

In einer im Weiteren hier nicht näher dargestellten Ausgestaltung des Verfahrens erfasst ein auf dem Computer 40 installiertes Programm den optischen Code 14 und decodiert die Identifikationskennzeichnung, den Betrag des Geldwerts und die Information über den Empfänger 18 des Bezahlvorgangs 16. Anschließend kommuniziert das auf dem Computer 40 installierte Programm zur Abwicklung des Bezahlvorgangs 16 der mobilen Kommunikationseinheit 24 entsprechend mit der Systemrecheneinheit 12. In einer im Weiteren hier nicht näher dargestellten Ausgestaltung des Verfahrens wird der optische Code 14 nach dem Anfordern von der Systemrecheneinheit 12 auf ein Plakat oder eine andere, dem Fachmann als sinnvoll erscheinende Fläche gedruckt. Mobile Kommunikationseinheiten 24 können den optischen Code 14 von dieser Fläche zur Initialisierung eines Bestellvorgangs erfassen. Dabei übermittelt die Systemrecheneinheit 12 an die Empfängerrecheneinheit 20 Versandinformationen, die der mobilen Kommunikationseinheit 24 zugeordnet sind. In einer im Weiteren hier nicht näher dargestellten Ausgestaltung des Verfahrens sendet die Empfängerrecheneinheit 20 mit einer Rechnung einen angeforderten optischen Code 14 an einen Besteller. Dieser startet den Bezahlvorgang 16, indem er mit dem Computer 40 oder mit der mobilen Kommunikationseinheit 24 den optischen Code 14 erfasst.

### Bezugszeichen

- 10: System
- 12: Systemrecheneinheit
- 14: optischer Code
- 16: Bezahlvorgang
- 18: Empfänger
- 20: Empfängerrecheneinheit
- 22: Fläche
- 24: Mobile Kommunikationseinheit
- 26: Kameravorrichtung
- 28: Recheneinheit
- 30: Anzeigemittel
- 32: Bediener
- 34: Eingabemittel
- 36: Bedienereingabe
- 40: Computer
- 42: Kommunikation
- 44: Kommunikation
- 46: Datenbank
- 48: Fotografieren
- 50: Kommunikation
- 52: Kommunikation
- 54: Kommunikation
- 56: Kommunikation
- 58: Geber
- 60: Bank
- 62: Kommunikation
- 64: Kommunikation
- 66: Kommunikation

## Patentansprüche

1. Verfahren mit einem System (10), das zumindest eine Systemrecheneinheit (12) umfasst, die einen optischen Code (14) erstellt, **dadurch gekennzeichnet, dass** der optische Code (14) zumindest eine Identifikationskennzeichnung aufweist, die einem einzelnen Geldwert eines Bezahlvorgangs (16) zugeordnet ist.

2. Verfahren nach Anspruch 1,
**dadurch gekennzeichnet, dass** in den optischen Code (14) eine Information über einen Betrag des Geldwerts codiert wird.

3. Verfahren nach einem der vorhergehenden Ansprüche,
**dadurch gekennzeichnet, dass** die Systemrecheneinheit (12) die Identifikationskennzeichnung und eine dazugehörige Information über einen Empfänger (18) des Bezahlvorgangs (16) speichert.

4. Verfahren nach einem der vorhergehenden Ansprüche,
**dadurch gekennzeichnet, dass**
das System (10) zumindest eine Empfängerrecheneinheit (20) aufweist, an die die Systemrecheneinheit (12) eine Information zur Darstellung des optischen Codes (14) sendet.

5. Verfahren nach Anspruch 4,
**dadurch gekennzeichnet, dass** die Empfängerrecheneinheit (20) den optischen Code (14) auf einer Fläche (22) darstellt.

6. Verfahren nach einem der vorhergehenden Ansprüche,
**dadurch gekennzeichnet, dass**
das System (10) zumindest eine mobile Kommunikationseinheit (24), insbesondere ein Mobiltelefon, mit einer Kameravorrichtung (26) und einer Recheneinheit (28) aufweist, die bei einem Bezahlvorgang (16) den optischen Code (14) mittels der Kameravorrichtung (26) erfasst.

7. Verfahren nach Anspruch 6,
**dadurch gekennzeichnet, dass**
die Recheneinheit (28) zumindest die Identifikationskennzeichnung aus dem optischen Code (14) bestimmt.

8. Verfahren zumindest nach Anspruch 2 und 6,
**dadurch gekennzeichnet, dass**
die Recheneinheit (28) die Information über einen Betrag des Geldwerts aus dem optischen Code (14) bestimmt.

9. Verfahren zumindest nach Anspruch 6,
**dadurch gekennzeichnet, dass**
die mobile Kommunikationseinheit (24) zumindest die Identifikationskennzeichnung an die Systemrecheneinheit (12) sendet.

10. Verfahren nach Anspruch 9,
**dadurch gekennzeichnet, dass**
die Systemrecheneinheit (12) auf einen Empfang der Identifikationskennzeichnung von der mobilen Kommunikationseinheit (24) mit einem Senden zumindest der Information über einen Betrag des Geldwerts des Bezahlvorgangs (16) antwortet.

11. Verfahren zumindest nach Anspruch 9,
**dadurch gekennzeichnet, dass**
die Systemrecheneinheit (12) auf einen Empfang der Identifikationskennzeichnung von einer mobilen Kommunikationseinheit (24) mit einem Senden zumindest der Information über den Empfänger (18) des Bezahlvorgangs (16) antwortet.

12. Verfahren zumindest nach Anspruch 6,
**dadurch gekennzeichnet, dass**
die mobile Kommunikationseinheit (24) zumindest ein Anzeigemittel (30) aufweist, das in zumindest einem Betriebszustand zumindest die Information über einen Betrag des Geldwerts einem Bediener (32) darstellt.

13. Verfahren zumindest nach Anspruch 6,
**dadurch gekennzeichnet, dass**
die mobile Kommunikationseinheit (24) zumindest ein Eingabemittel (34) aufweist, das in zumindest einem Betriebszustand eine Bedienereingabe (36) zu einer Freigabe des Bezahlvorgangs (16) aufnimmt.

14. Verfahren nach einem der vorhergehenden Ansprüche,
**dadurch gekennzeichnet, dass**
die Systemrecheneinheit (12) den Bezahlvorgang (16) anweist.

15. Verfahren zumindest nach Anspruch 4 und 14,
**dadurch gekennzeichnet, dass**
die Systemrecheneinheit (12) eine Bestätigung der Anweisung des Bezahlvorgangs (16) an die Empfängerrecheneinheit (20) sendet.

16. System zumindest nach Anspruch 1.

17. Systemrecheneinheit zumindest nach Anspruch 1.

18. Empfängerrecheneinheit zumindest nach Anspruch 4.

19. Mobile Kommunikationseinheit zumindest nach Anspruch 6.
